# EUROPÄISCHE PATENTSCHRIFT

(11) **EP 1 495 937 B1**
(45) Veröffentlichungstag und Bekanntmachung des Hinweises auf die Patenterteilung: **06.01.2010**
(21) Anmeldenummer: 04405386.6
(22) Anmeldetag: 21.06.2004
(51) Int. Cl.: B62B 3/16, B62B 3/04

(54) **Transportroller**
Transport trolley
Chariot de transport

(30) Priorität: 10.07.2003 CH 12032003
(43) Veröffentlichungstag der Anmeldung: 12.01.2005
(73) Patentinhaber: Georg Utz Holding AG, 5620 Bremgarten (CH)
(72) Erfinder: Dubois, Jean-Marc, 5620 Bremgarten (CH); Schwab, Boris, 5234 Villigen (CH)
(74) Vertreter: Spierenburg, Pieter

(56) Entgegenhaltungen:
- WO-A-99/41129
- GB-A- 2 131 751
- GB-A- 2 378 680
- US-B1- 6 327 984

## Beschreibung

Die Erfindung betrifft einen Transportroller nach dem Oberbegriff des Anspruchs 1.

Solche Transportroller sind allgemein bekannt und werden vorzugsweise zum Transport von quaderförmigen Behältern, Kisten oder stapelbaren Transportbehältern eingesetzt. Die Oberseite des Transportrollers dient dabei als Auflagefläche für das Transportgut. Seitlich und in der Mitte der Auflagefläche angeordnete Gleitschutzleisten verhindern ein Verrutschen des Transportgutes. Die Masse der Auflagefläche und die Anordnung der Gleitschutzleisten ist so gewählt, dass zwei Transportbehälter nebeneinander berührungsfrei platzierbar sind. Die Transportroller weisen ein Aussenmass auf, das geringfügig grösser ist als das Aussenmass der auf den Transportroller platzierten Transportbehälter-Stapel. Dadurch lassen sich die Transportroller platzsparend mit ihrem Transportgut längs- und querseitig ohne Abstand aneinander reihen. Stapelbare, verschliessbare Transportbehälter weisen zwei Deckelhälften auf, die je an den Längsseitenwänden der Transportbehälter fest anscharniert sind. Diese mit den beiden Deckelhälften verschlossenen Behälter lassen sich auf dem Transportroller übereinander stapeln, ohne dass sich die nebeneinander angeordneten Transportbehälter berühren oder behindern. Beim Transport der leeren Transportbehälter können diese Behälter nach dem seitlichen Wegklappen der Deckelhälften aufgrund ihrer konischen Bauweise platzsparend ineinander gestapelt werden. Die aufgeklappten Deckelhälften werden von Schnappelementen gehalten, die an den Seitenwänden des Transportbehälters vorgesehen sind. Ein Stapel von leeren, ineinander geschachtelten Transportbehältern ist durch die seitlich abgeklappten Deckel breiter als ein Stapel mit den Deckeln verschlossener Transportbehälter. Dies führt allerdings dazu dass keine zwei Leergut Stapel mit ineinander geschachtelten Transportbehältern auf der Auflagefläche des Transportrollers platziert werden können. Die gattungsgemäße Veröffentlichung GB-A-2 378 680 offenbart einen Transportroller der oben genannten Art, welcher eine erweiterbare Plattform aufweist, um gestapelten Behältern eine genügend grosse Stellfläche auf dem Transportroller zu bieten. Zu diesem Zweck wird eine an einer Querseite des Transportrollers angeordnete, ausklappbare Erweiterung des Transportrollers vorgeschlagen. Diese Erweiterung besteht aus einer um 180° schwenkbar gelagerten Backe, die sich über einen Teil der Querseite erstreckt. Die vorgeschlagene Lösung ermöglicht das Abstellen zweier nebeneinander gestapelter und ineinander geschachtelter Transportbehälter auf der Plattform des Transportrollers. Durch die seitlich abgeklappten Deckel sind die nebeneinander angeordneten Stapel jedoch breiter als die Plattform des Transportrollers, das heisst, dass die seitlich abgeklappten Deckel der gestapelten Transportbehälter den Transportroller überragen. Beim Verschieben und Abstellen der Transportroller stossen die Deckel der Transportbehälter aneinander und können so leicht beschädigt werden.

Es ist daher die Aufgabe der vorliegenden Erfindung, einen Transportroller mit variabler Auflagefläche zu schaffen, der es ermöglicht, sowohl mindestens zwei der schmäleren Stapel mit verschlossenen Transportbehältern, wie auch mindestens zwei der breiteren Stapel der ineinander geschachtelten Transportbehälter mit seitlich nach unten geklappten Deckeln zu platzieren, und der die Nachteile der bekannten Transportroller überwindet.

Diese Aufgabe wird von einem Transportroller mit den Merkmalen des Anspruchs 1 gelöst.

Die Grundidee dieser Lösung ist, die Auflagefläche des Transportrollers bei Bedarf mit seitlich ausklappbaren Zusatzelementen zu vergrössern. Zweckmässige Ausgestaltungen der Erfindung gehen aus den Unteransprüchen hervor. Ein Ausführungsbeispiel des erfindungsgemässen Transportrollers wird anhand der Zeichnung erläutert.

Es zeigen:
- Fig. 1: Eine perspektivische Darstellung eines mit zwei Transportbehältern beladenen Transportrollers;
- Fig. 2: Eine Seitenansicht eines mit zwei Transportbehälter-Stapeln beladenen Transportrollers, bei dem die gestapelten Transportbehälter mit Deckeln verschlossen sind;
- Fig. 3: Eine Seitenansicht eines mit zwei Transportbehälter-Stapeln beladenen Transportrollers mit ineinander geschachtelten Transportbehältern, deren Deckel seitlich abgeklappt sind;
- Fig. 4: Eine schematische Darstellung eines Trägerbodens, beladen mit einem geöffneten und einem verschlossenen Transportbehälter;
- Fig. 5: Eine perspektivische Darstellung eines Transportrollers mit eingeklappten Zusatzelementen;
- Fig. 6: Eine perspektivische Darstellung eines Transportrollers mit ausgeklappten Zusatzelementen;
- Fig. 7: Eine perspektivische Darstellung von zwei aufeinander gestapelten Transportrollern.

In den Figuren sind für dieselben Elemente jeweils die gleichen Bezugszeichen verwendet worden und erstmalige Erklärungen betreffen alle Figuren, wenn nicht ausdrücklich anders erwähnt.

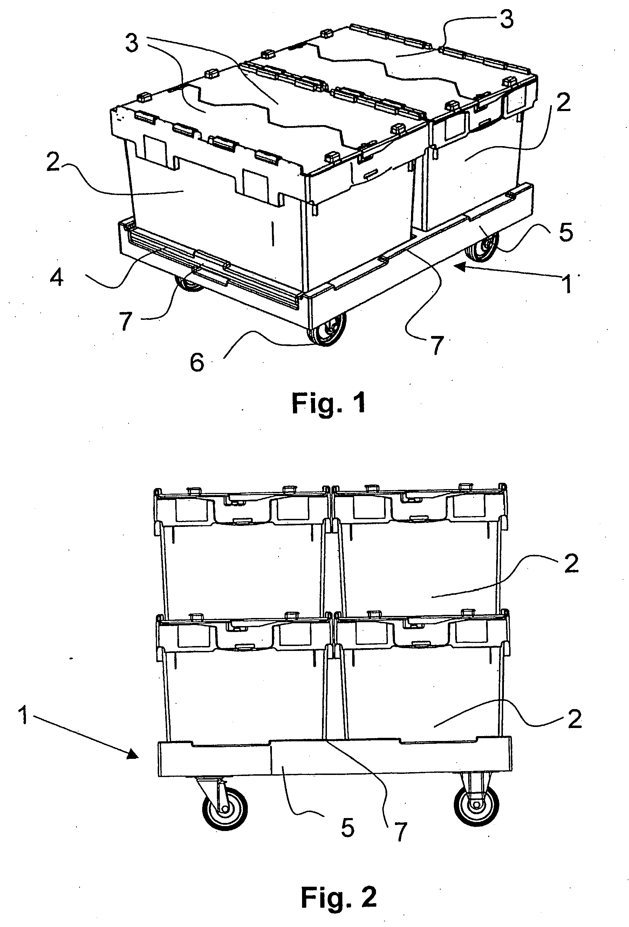

Die Figur 1 zeigt einen mit zwei Transportbehältern 2 beladenen Transportroller 1. Der Transportroller 1 besteht im Wesentlichen aus einem rechteckigen Trägerboden 5, an dessen Unterseite vier Räder 6 angeordnet sind. Vorzugsweise sind zwei dieser Räder 6 Lenkrollen, nämlich ein Räderpaar, das an einer Querseite des Transportrollers 1 benachbart ist. Es können aber auch alle vier Räder Lenkrollen sein. Bei diesen Lenkrollen verlaufen die Laufradachsen exzentrisch zu ihre vertikalen Achse, um welche die Laufrollen drehbar sind. Das hat den Vorteil, dass die Transportroller 1 beim Verschieben leicht lenk- und steuerbar sind. An den beiden Querenden des Trägerbodens 5 ist je ein ausklappbares Zusatzelement 4 angeordnet, welches um 180° nach aussen aufklappbar ist. Durch das Ausklappen der Zusatzelemente 4 wird die Abstellfläche für die Transportbehälter 2 vergrössert, wie das an Hand der nachfolgenden Figuren noch ausführlicher erläutert wird. An der Längsseite des Trägerbodens 5 und an den Zusatzelementen 4 sind Anschlagkanten 7 erkennbar. Diese Anschlagkanten 7 bilden einen Gleitschutz und dienen der Zentrierung der auf dem Trägerboden 5 platzierten Transportbehälter 2. Die abgebildeten Transportbehälter 2 sind mit Deckeln 3 abgedeckt und können so auf dem Transportroller 1 gestapelt und transportiert werden.

In der Figur 2 ist ein mit zwei Transportbehälter-Stapeln beladener Transportroller 1 in einer Seitenansicht dargestellt. Die durch die Anschlagkanten 7 begrenzte Stellfläche auf der Oberseite des Trägerbodens 5 ist gerade so gross, dass die beiden Stapel nebeneinander darauf platziert werden können. Die Anschlagkanten 7 verhindern ein verrutschen der Transportbehälter 2 am Trägerboden 5 beim Bewegen oder Verfrachten des Transportrollers 1.

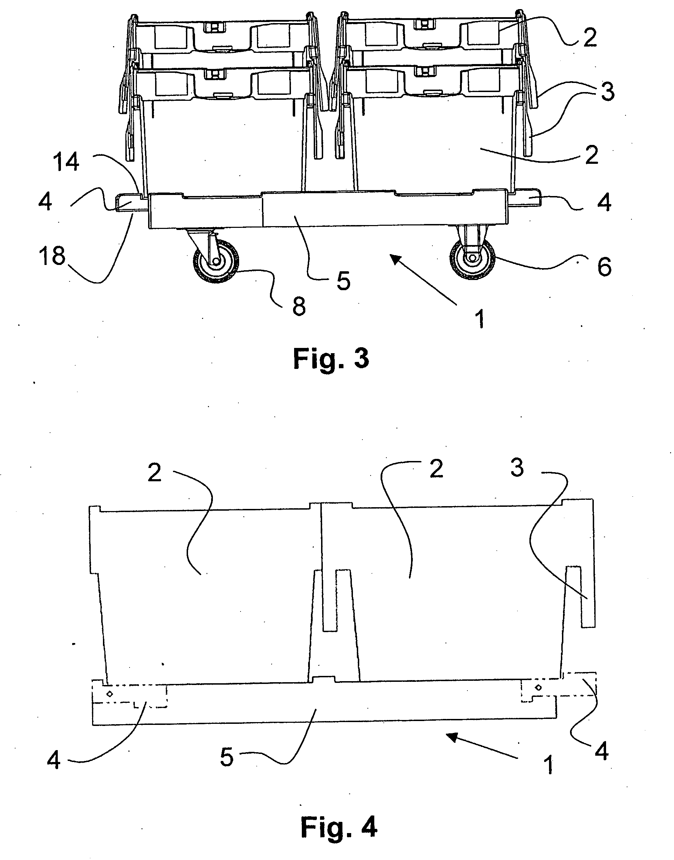

Die Figur 3 zeigt den erfindungsgemässen Transportroller 1, der mit zwei Transportbehälter-Stapeln von ineinander geschachtelten Transportbehältern 2 beladen ist. Die Deckel 3 der ineinander geschachtelten Transportbehälter 2 sind seitlich nach aussen abgeklappt. Die Breite der einzelnen Stapel wird durch die abgeklappten Deckel 3 gegenüber den Stapeln mit verschlossenen Transportbehältern 2 grösser. Sie benötigen daher auch eine grössere Stellfläche auf der Oberseite des Trägerbodens 5. Zu diesem Zweck werden die Zusatzelemente 4 am Trägerboden 5 des Transportrollers 1 seitlich ausgeklappt. Durch das Ausklappen der Zusatzelemente 4 wird der Transportroller 1 verlängert und damit auch die Stellfläche vergrössert. Die Grösse der Zusatzelemente 4 ist so gewählt, dass einerseits zwei Stapel mit den ineinander geschachtelten Transportbehältern 2 nebeneinander berührungslos auf der vergrösserten Stellfläche platziert werden können, und dass andererseits die Gesamtlänge des Transportrollers grösser ist, als die gesamte Breite der Transportbehälter-Stapel. Das heisst, dass die Transportbehälter 2 oder deren Deckel 3 den Transportroller 1 nicht überragen. Das hat den Vorteil, dass beim Aneinanderstossen von Transportrollern 1 die Trägerböden 5 bzw. die Zusatzelemente 4 den Stoss auffangen, und die Transportbehälter 2 oder deren Deckel 3 dabei nicht beschädigt werden. Im gezeigten Beispiel sind an der Unterseite des Trägerbodens 5 links Lenkrollen 8 und rechts feste Rollen 6 angeordnet.

Die Figur 4 zeigt eine schematischen Darstellung eines mit zwei Transportbehältern 2 beladenen Trägerbodens 5, bei dem rechts das Zusatzelement 4 ausgeklappt und links das Zusatzelement 4 eingeklappt ist. Am rechten Transportbehälter 2 sind die Deckel 3 seitlich nach unten geklappt, wodurch der Behälter eine grössere Stellfläche benötigt als der linke Behälter, dessen Deckel verschlossen sind. Die für den rechten Behälter 2 benötigte grössere Stellfläche wird durch das Ausklappen des rechten Zusatzelementes 4 erreicht. Der linke Behälter 2 findet auf der Stellfläche ohne ausgeklapptes Zusatzelement 4 Platz. Das ein- oder beidseitige Ausklappen der Zusatzelemente 4 erlaubt ein flexibles Handhaben der Transportroller 1. Die Stellfläche kann den Bedürfnissen entsprechend angepasst werden. Es können so auf dem Trägerboden 5 sowohl nur geöffnete oder nur geschlossene als auch geöffnete und geschlossene Transportbehälter 2 gestapelt platziert werden.

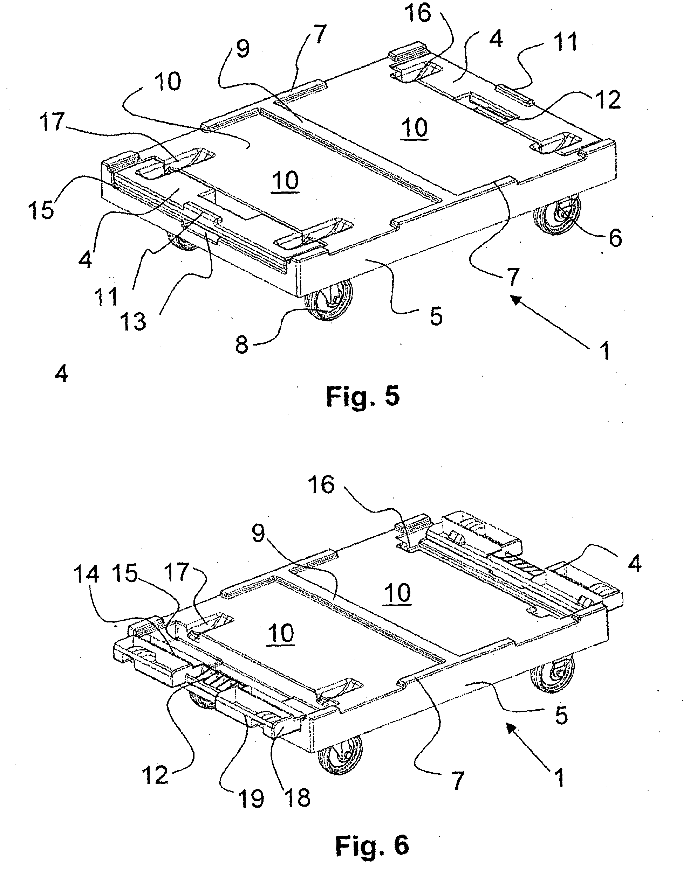

In Figur 5 ist ein unbeladener Transportroller 1 mit eingeklappten Zusatzelementen 4 perspektivisch dargestellt. An der Unterseite des einstückig geformten Trägerbodens 5 sind rechts feste Räder 6 und links Lenkrollen 8 angeordnet. Die Laufrollen der Lenkrollen sind um ihre vertikale Achse drehbar, wodurch der Transportroller 1 beim Verschieben leicht lenk- und steuerbar ist. An den beiden Längsseiten des Trägerbodens 5 sind an der Oberseite nach oben ragende Anschlagkanten 7 angeformt. Im gezeigten Beispiel verläuft eine zusätzlich Anschlagkante 9 in der Mitte des Trägerbodens 5 parallel zur Querseite des Transportrollers 1. Der Trägerboden 5 weist an seinen Querenden quaderförmige Ausnehmungen 15 auf, die zur Aufnahme der Zusatzelemente 4 bestimmt sind. Diese Zusatzelemente 4 sind in den Ausnehmungen 15 des Trägerbodens 5 seitlich mittels Bolzen anscharniert. Diese Scharniere sind in der Figur nicht gezeichnet. Die Dicke des Zusatzelementes 4 entspricht der Dicke der Ausnehmung, so dass bei eingeklappten Zusatzelementen 4 die Ausnehmung 15 im Trägerboden 5 ausgefüllt ist und die Oberseite des Zusatzelementes einen Teil der Stellfläche 10 bildet. An der oberen Aussenkante des Zusatzelementes 4 ist eine Nase 11 angeformt, die als seitliche Anschlagkante dient. Diese Nase 11 bildet mit den seitlichen Anschlagkanten 7 und der quer verlaufenden Kante 9 eine Art Rahmen, der die Stellfläche 10 des Transportrollers 1 in zwei Hälften unterteilt. Die Stellflächen 10 innerhalb der Anschlagkanten 7, 9, 11 entspricht etwa der Bodenfläche der Transportbehälter 2 für welche der Transportroller 1 bestimmt ist. Beim Beladen des Transportrollers 1 werden die Transportbehälter 2 innerhalb der Anschlagkanten 7, 9, 11 rutschsicher platziert und zentriert. In der Mitte der Zusatzelemente 4 ist eine Ausnehmung vorgesehen, die einen Handgriff 12 bildet. Diese Handgriffe 12 erleichtern das Tragen, Hantieren und Stapeln der leeren Transportroller 1. Der Trägerboden 5 weist an der Mitte der Querseite unterhalb des Zusatzelementes 4 eine Aussparung 13 auf. Diese Aussparung 13 entspricht in der Form und Grösse der Nase 11. Beim Ausklappen der Zusatzelemente 4 schlägt die Nase 11 innerhalb der Aussparung 13 am Trägerboden 5 an und verhindert dadurch ein Überdrehen der Zusatzelemente 4.

Ein Transportroller 1 mit ausgeklappten Zusatzelementen 4 ist in einer perspektivischen Darstellung in Figur 6 gezeigt. In der Mitte des ausgeklappten Zusatzelementes 4 ist die Ausnehmung, welche den Hangriff 12 bildet, zu erkennen. Die Unterseite des Zusatzelementes 4, die nun beim ausgeklappten Zusatzelement 4 nach oben gerichtet ist, weist eine Abstufung auf. Diese Abstufung verläuft parallel zur Querseite des Transportrollers 1 und bildet die seitliche Anschlagkante 14. Sie verhindert das seitliche Abgleiten der auf dem Transportroller 1 gestapelten Transportbehälter. Beim Stapeln von ineinander geschachtelten Transportbehältern 2 werden diese auf der Auflagefläche 10 bis an die seitliche Anschlagkante 14 geschoben, wie das in der Figur 3 zu sehen ist. Die Breite der Zusatzelemente 4 ist so gewählt, dass der den Transportroller 1 seitlich überragende Teil 18 grösser ist als die auf das Zusatzelement 4 senkrecht projizierte Teilfläche der auf dem Transportroller 1 gestapelten Transportbehälter 2. Das bedeutet, dass beim Aneinanderstossen von Transportrollern 1 immer nur deren Längsseiten oder deren Vorderkanten 19 der Zusatzelemente 4 in Berührung kommen, und nicht die gestapelten Transportbehälter 2 oder deren seitlich abgeklappte Deckel 3, was die gestapelten Transportbehälter 2 beim Verschieben und Verfrachten schont. In den Eckbereichen des Trägerbodens 5, in welchen an der Unterseite die Räder 6 angeordnet sind, weisen die Auflagefläche 10 bzw. die Zusatzelemente 4 Ausnehmungen auf, die als Radmulden 16 , 17 ausgeformt sind. Die schlitzförmigen Radmulden 16, 17 verlaufen parallel zur Längsseite des Transportrollers 1 und sind in der Draufsicht rechtwinkelig ausgebildet. Sie haben eine Breite, die geringfügig grösser als die Breite eines Laufrades 6, 8 ist. Beim übereinander Stapeln leerer Transportroller 1 kommen die Räder 6 eines auf einer Auflagefläche 10 gestapelten Transportrollers 1 in den Radmulden 16, 17 eines darunter liegenden Transportrollers 1 zu liegen. Von den vier Rädern wird wenigstens ein Rad in einer Radmulde 16 formschlüssig gehalten, wodurch die Transportroller 1 nicht von der Auflagefläche herunterrollen oder heruntergleiten können. Auf diese Art können die Transportroller 1 platzsparend gestapelt und versorgt werden.

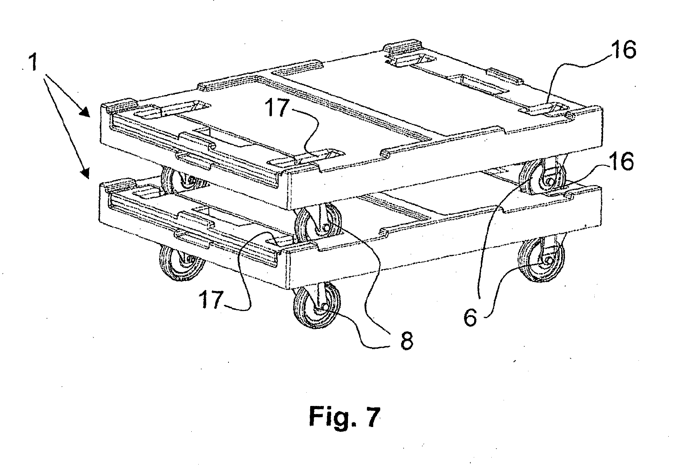

Die Figur 7 zeigt zwei übereinander gestapelte Transportroller 1 in einer perspektivischen Darstellung. Die Räder 6 des oberen Transportrollers 1 liegen in den Radmulden 16, 17 des unteren Transportrollers 1. Die linken Räder sind Lenkrollen 8, die um ihre vertikale Achse drehbar sind. Durch ihre exzentrische Vertikalachse können die Lenkrollen 8 bei parallel zur Längsseite des Transportrollers 1 ausgerichteten Rädern 8 zwei verschiedene Positionen einnehmen, eine Vorlauf- und eine Nachlaufposition. Um den Transportroller 1 ungeachtet der Radstellung der Lenkrollen 8 stapeln zu können, sind die Radmulden 17 an der Vorderseite des Transportrollers 1 so gestaltet, dass die Lenkrollen 8 sowohl in der Vorlauf- wie auch in der Nachlaufposition in die Radmulden 17 einpassen. Die Transportroller 1 werden jeweils so gestapelt, dass die Lenkrollen 8 in den vorderen Radmulden 17 zu liegen kommen. Die hinteren Räder 6 werden in den hinteren Radmulden 16 formschlüssig gehalten, wodurch die Transportroller 1 nicht von der Auflagefläche herunterrollen können. Dadurch sind die gestapelten Transportroller immer gleich ausgerichtet, was sich beim weiteren Hantieren und Beladen der Transportroller 1 sehr vorteilhaft auswirkt.

## Patentansprüche

1. Transportroller, insbesondere zum Bewegen wenigstens eines stapelbaren Transportbehälters (2) mit einem auf Rädern (6, 8) rollbaren, im Wesentlichen rechtwinkeligen und erweiterbaren Trägerboden (5) mit Gleitschutzeinrichtungen (7, 9, 11), welcher der Aufnahme der Transportbehälter (2) dient, **dadurch gekennzeichnet, dass** an den beiden Querenden des Trägerbodens (5) je ein ausklappbares Zusatzelement (4) anscharniert ist, welches um 180° nach aussen aufklappbar ist, und welche eine Vergrösserung der Auflagefläche (10) des Trägerbodens (5) bewirken, dass weiter im Trägerboden (5) und an den Zusatzelementen (4) schlitzförmige Ausnehmungen vorgesehen sind, die parallel zur Längsseite des Transportrollers (1) verlaufen und als Radmulden (16 , 17) ausgeformt sind, in welche im unbeladenen Zustand die Räder (6, 8) eines auf dem Trägerboden (5) des Transportrollers (1) angeordneten zweiten Transportrollers (1) formschlüssig einsetzbar sind.

2. Transportroller nach Anspruch 1, **dadurch gekennzeichnet, dass** an den beiden Längsseiten des Trägerbodens (5) an der Oberseite nach oben ragende Anschlagkanten (7) angeformt sind, die als Gleitschutz für die Transportbehälter (2) dienen, dass weiter der Trägerboden (5) an seinen Querenden quaderförmige Ausnehmungen (15) aufweist, die zur Aufnahme der Zusatzelemente (4) bestimmt sind, dass die Zusatzelemente (4) in den Ausnehmungen (15) des Trägerbodens (5) seitlich mittels Bolzen anschamiert sind, dass weiter die Dicke der Zusatzelemente (4) der Dicke der Ausnehmung (15) entspricht, derart, dass bei eingeklappten Zusatzelementen (4) die Ausnehmung (15) im Trägerboden (5) ausgefüllt ist und die Oberseite des Zusatzelementes (4) einen Teil der Stellfläche (10) bildet, und dass weiter an der oberen Aussenkante jedes Zusatzelementes (4) eine Nase (11) angeformt ist, die als seitliche Anschlagkante (7) dient.

3. Transportroller nach Anspruch 2, **dadurch gekennzeichnet, dass** der Trägerboden (5) in der Mitte der Querseite unterhalb der Zusatzelemente (4) je eine Aussparung (13) vorgesehen ist, die in der Form und Grösse der Nase (11) entspricht, und die dazu bestimmt ist, bei ausgeklappten Zusatzelement (4) die Nase (11) formschlüssig zu halten, um dadurch ein Überdrehen der Zusatzelemente (4) zu verhindern.

4. Transportroller nach einem der vorherigen Ansprüche, **dadurch gekennzeichnet, dass** zwei an einer Querseite des Transportrollers 1 benachbarte Räder (6) Lenkrollen (8) sind, deren Laufradachsen exzentrisch zu ihre vertikalen Achse verlaufen, um welche die Laufrollen drehbar sind.

5. Transportroller nach einem der vorhergehenden Ansprüche, **dadurch gekennzeichnet, dass** in der Mitte des Zusatzelementes (4) eine Ausnehmung vorgesehen ist, die einen Handgriff (12) bildet.

## Claims

1. A transport cart, especially for moving at least one stackable transport container (2), comprising a support base (5) which has sliding protection devices (7, 9, 11), can be rolled on wheels (6, 8), is substantially rectangular and expandable and is used for accommodating the transport containers (2), **characterized in that** one fold-out additional element (4) each is hinged on the two transversal ends of the support base (5) which can be folded to the outside by 180° and which cause an enlargement of the support surface (10) of the support base (5), that slit-shaped recesses are further provided in the support base (5) and the additional elements (4) which extend parallel to the longitudinal side of the transport cart (1) and are arranged as wheel troughs (16, 17) in which in the unloaded state the wheels (6, 8) of a second transport cart (1) arranged on the support base (5) of the transport cart (1) can be inserted in an interlocking manner.

2. A transport cart according to claim 1, **characterized in that** stop edges (7) which protrude upwardly on the upper side are formed on the longitudinal sides of the support base (5), which edges are used as a sliding protection for the transport containers (2), that further the support base (5) further comprises cuboid-shaped recesses (15) on its transversal ends which are determined for accommodating the additional elements (4), that the additional elements (4) are hinged in the recesses (15) of the support base (5) on the side by means of pins, that further the thickness of the additional elements (4) corresponds to the thickness of the recess (15) in such a way that when the additional elements (4) are folded in, the recess (15) in the support base (5) is filled and the upper side of the additional element (4) forms a portion of the storage space (10), and that further a nose (11) is formed on the upper outside edge of each additional element (4) which is used as a lateral stop edge (7).

3. A transport cart according to claim 2, **characterized in that** the support base (5) comprises a recess (13) each in the middle of the transversal side beneath the additional elements (4), which recess corresponds in respect to its shape and size to the nose (11) and which is determined to hold the nose (11) in an interlocking manner when the additional element (4) is folded out in order to thus prevent any over-twisting of the additional elements (4).

4. A transport roller according to one of the preceding claims, **characterized in that** two wheels (6) which are adjacent on a transversal side of the transport cart (1) are castors (8) whose running wheel axles extend eccentrically in relation to their vertical axis about which the castors are rotatable.

5. A transport roller according to one of the preceding claims, **characterized in that** a recess is provided in the middle of the additional element (4) which forms a handle (12).

## Revendications

1. Châssis de transport, en particulier pour déplacer au moins un récipient de transport empilable (2), avec un fond portant (5) pouvant rouler sur des roues (6, 8), sensiblement rectangulaire et extensible, muni de dispositifs antidérapants (7, 9, 11), qui sert à recevoir les récipients de transport (2), **caractérisé en ce qu'**il est prévu articulé aux deux extrémités transversales du fond portant (5) un élément supplémentaire rabattable (4) qui peut être rabattu à 180° vers l'extérieur et qui agrandit la surface d'appui (10) du fond portant (5), **en ce qu'**il est en outre prévu dans le fond portant (5) et sur les éléments supplémentaires (4) des évidements en forme de fente qui sont parallèles au côté longitudinal du châssis de transport (1) et sont conformés comme des cuvettes de bord (16, 17) dans lesquelles, dans l'état sans charge, les roues (6, 8) d'un deuxième châssis de transport (1) disposé sur le fond portant (5) du châssis de transport (1) peuvent être introduites en correspondance de forme.

2. Châssis de transport selon la revendication 1, **caractérisé en ce que** sont formées sur les deux côtés longitudinaux du fond portant (5) sur sa face supérieure des bords de butée (7) dépassant vers le haut, qui servent à empêcher les récipients de transport (2) de glisser, **en ce que** le fond portant (5) présente en outre à ses extrémités transversales des évidements carrés (15) destinés à recevoir les éléments supplémentaires (4), **en ce que** les éléments supplémentaires (4) sont articulés dans les évidements (15) du fond portant (5) sur le côté au moyen de boulons, **en ce que** l'épaisseur des éléments supplémentaires (4) correspond en outre à l'épaisseur de l'évidement (15), de telle sorte que quand les éléments supplémentaires (4) sont rabattus vers l'intérieur, l'évidement (15) du fond portant (5) est rempli et la face supérieure de l'élément supplémentaire (4) forme une partie de la surface de pose (10), et **en ce qu'**est en outre formé sur le bord extérieur supérieur de chaque élément supplémentaire (4) un bec (11) qui sert de bord de butée latéral (7).

3. Châssis de transport selon la revendication 2, **caractérisé en ce qu'**il est prévu dans le fond portant (5) au milieu du côté latéral en dessous des éléments supplémentaires (4) un évidement (13) dont la forme et la taille correspondent au bec (11) et qui est destiné à retenir le bec (11) par correspondance de forme quand l'élément supplémentaire (4) est rabattu vers l'extérieur, afin d'empêcher une torsion des éléments supplémentaires (4).

4. Châssis de transport selon l'une des revendications précédentes, **caractérisé en ce que** deux roues (6) voisines sur un côté transversal du châssis de transport (1) sont des roulettes de guidage (8) dont les axes de rotation sont excentriques par rapport à leur axe vertical autour duquel les roulettes de roulement peuvent tourner.

5. Châssis de transport selon l'une des revendications précédentes, **caractérisé en ce qu'**il est prévu au milieu de l'élément supplémentaire (4) un évidement formant une poignée (12).
